# EUROPEAN PATENT APPLICATION

(11) **EP 3 855 354 A2**
(43) Date of publication of application: **28.07.2021**
(21) Application number: 21178548.0
(22) Date of filing: 09.06.2021
(51) Int. Cl.: G06K 9/00

(54) **METHOD AND APPARATUS FOR RECOGNIZING ABNORMAL LICENSE PLATE, DEVICE AND READABLE STORAGE MEDIUM**

(30) Priority: 16.11.2020 CN 202011282069
(71) Applicant: BEIJING BAIDU NETCOM SCIENCE TECHNOLOGY CO., LTD., No.10 Shangdi 10th Street Haidian District Beijing 100085 (CN)
(72) Inventor: DU, Yuting, Beijing (CN)
(74) Representative: J A Kemp LLP

(57) **Abstract**

The present application discloses a method and an apparatus for recognizing an abnormal license plate, a device and a readable storage medium, which relates to the technical field of artificial intelligence, and further relates to the technical fields of image processing and intelligent transportation. The specific implementation solution is as follows: after obtaining (201) an image to be recognized containing a target vehicle, an electronic device extracts (202) a license plate area image of the target vehicle from the image to be recognized, and normalizes (203) the license plate area image of the target vehicle to obtain a normalized image. After that, the electronic device reconstructs (204) the normalized image to obtain a reconstructed image, and determines (205) whether a license plate of the target vehicle is abnormal according to the normalized image and the reconstructed image. In this process, the electronic device reconstructs the normalized image of the license plate area image, and recognizes whether the license plate of the vehicle is abnormal using the reconstructed image and the normalized image, which has high accuracy, high efficiency and low labor cost.

## Description

### TECHNICAL FIELD

Embodiments of the present application relate to the technical field of artificial intelligence, further relate to the technical fields of image processing and intelligent transportation and, in particular, to a method and an apparatus for recognizing an abnormal license plate, a device and a readable storage medium.

### BACKGROUND

With rapid development of technology, various types of vehicles have gradually penetrated into people's life. Recognition of a license plate of a vehicle is one of the important tasks in the field of surveillance and security.

In the intelligent transportation system, cameras are installed at security checkpoints and key security sections of urban roads or expressways, and the cameras are used to shoot passing vehicles to obtain surveillance videos. In the process of recognizing license plate, the surveillance videos are sampled and viewed mainly in a manual method, so as to recognize whether the license plates of vehicles running on the road are blocked. If a license plate is blocked, the license plate is considered as an abnormal license plate.

The above-mentioned method of manually recognizing the abnormal license plates has low accuracy, low recognition efficiency and high recognition cost.

### SUMMARY

The present application provides a method and an apparatus for recognizing an abnormal license plate, a device and a readable storage medium. A reconstructed image and a normalized image are used to recognize whether a license plate of a vehicle is abnormal, which has high accuracy, high efficiency and low labor cost.

In a first aspect, an embodiment of the present application provides a method for recognizing an abnormal license plate, including:
acquiring an image to be recognized, where the image to be recognized contains a target vehicle, extracting a license plate area image from the image to be recognized, normalizing the license plate area image of the target vehicle to obtain a normalized image, where the license plate area image contains a license plate area of the target vehicle, reconstructing the normalized image to obtain a reconstructed image, and determining whether a license plate of the target vehicle is abnormal according to the normalized image and the reconstructed image.

In a second aspect, an embodiment of the present application provides an apparatus for recognizing an abnormal license plate, including:
an acquiring module, configured to acquire an image to be recognized, where the image to be recognized contains a target vehicle;
an extracting module, configured to extract a license plate area image from the image to be recognized;
a normalizing module, configured to normalize the license plate area image of the target vehicle to obtain a normalized image, where the license plate area image contains a license plate area of the target vehicle;
a reconstructing module, configured to reconstruct the normalized image to obtain a reconstructed image; and
a determining module, configured to determine whether a license plate of the target vehicle is abnormal according to the normalized image and the reconstructed image.

In a third aspect, an embodiment of the present application provides an electronic device, including:
at least one processor; and
a memory communicatively connected to the at least one processor; where,
the memory stores instructions executable by the at least one processor, and the instructions are executed by the at least one processor to enable the at least one processor to execute the method of the first aspect or any method that may be implemented in the first aspect.

In a forth aspect, an embodiment of the present application provides a computer program product containing instructions, which, when running on an electronic device, causes a computer to execute the method of above first aspect or the method of various possible implementations of the first aspect.

In a fifth aspect, an embodiment of the present application provides a non-transitory computer-readable storage medium storing computer instructions, where the computer instructions are used to enable a computer to execute the method of above first aspect or the method of various possible implementations of the first aspect.

In a sixth aspect, an embodiment of the present application provides a method for recognizing an abnormal license plate, including: acquiring a license plate area image, normalizing the license plate area image to obtain a normalized image, reconstructing the normalized image to obtain a reconstructed image, and determining whether a license plate of the target vehicle is abnormal according to the normalized image and the reconstructed image.

In a seventh aspect, an embodiment of the present application provides a computer program product, including: a computer program, where the computer program is stored in a non-transitory computer-readable storage medium, at least one processor of an electronic device can read the computer program from the non-transitory computer-readable storage medium, and the at least one processor executes the computer program to enable the electronic device to execute the method of above first aspect or the method of various possible implementations of the first aspect.

According to the technology of the present application, the electronic device recognizes whether a license plate of a vehicle is abnormal using a reconstructed image and a normalized image, which has high accuracy, high efficiency and low labor cost.

It should be understood that the various forms of processes shown above can be used to reorder, add or delete steps. For example, the various steps described in the present application can be performed in parallel, sequentially, or in a different order, as long as the desired result of the technical solution disclosed in the present application can be achieved, which is not limited herein.

The above specific implementations do not constitute a limitation on the protection scope of the present application. Those skilled in the art should understand that various modifications, combinations, sub-combinations and substitutions can be made according to design requirements and other factors. Any amendments, equivalent substitutions and improvements made within the spirit and principles of the present application shall be included in the protection scope of the present application.

### BRIEF DESCRIPTION OF DRAWINGS

The accompanying drawings are used for better understanding of the solution and do not constitute a limitation to the present application, where:
FIG. 1 is a schematic diagram of a network architecture of a method for recognizing an abnormal license plate provided by an embodiment of the present application;
FIG. 2 is a flowchart of a method for recognizing an abnormal license plate provided by an embodiment of the present application;
FIG. 3 is a schematic diagram of a process of extracting a license plate area in a method for recognizing an abnormal license plate provided by an embodiment of the present application;
FIG. 4 is another schematic diagram of a process of extracting a license plate area in a method for recognizing an abnormal license plate provided by an embodiment of the present application;
FIG. 5 is another process schematic diagram of a method for recognizing an abnormal license plate provided by an embodiment of the present application;
FIG. 6 is a structural schematic diagram of an apparatus for recognizing an abnormal license plate provided by an embodiment of the present application;
FIG. 7 is another structural schematic diagram of an apparatus for recognizing an abnormal license plate provided by an embodiment of the present application; and
FIG. 8 is a block diagram of an electronic device for implementing a method for recognizing an abnormal license plate provided by an embodiment of the present application.

### DETAILED DESCRIPTION OF EMBODIMENTS

The exemplary embodiments of the present application are described below in conjunction with the accompanying drawings, which include various details of the embodiments of the present application to facilitate understanding, and they should be regarded as merely exemplary. Therefore, those of ordinary skilled in the art should recognize that various changes and modifications can be made to the embodiments described herein without departing from the scope and spirit of the present application. Likewise, for clarity and conciseness, descriptions of well-known functions and structures are omitted in the following description.

An important task in the field of surveillance and security is to recognize illegal vehicles. Some drivers will use illegal means such as blocking, defacing, smearing, reflecting and not hanging a license plate to avoid tracking of an electronic device. The license plate produced by this illegal means is called an abnormal license plate. In addition, unconscious occlusion, such as the license plate of a muck truck blocked by stains, also leads to the abnormal license plate of the muck truck. Timely and accurate recognition of the abnormal license plate can make urban management more orderly.

At present, in the field of surveillance and security, when an abnormal recognition of a license plate of a vehicle is performed, the surveillance videos are mainly sampled and viewed manually, which lacks technical height and depth. Taking the muck truck as an example, when the license plate of the muck truck is blocked or defaced, it is difficult to recognize whether the license plate in an image is abnormal by manual recognition. Moreover, it is difficult to recognize the abnormal license plate manually in dark scenes with very few positive samples. In addition, the manual recognition method has disadvantages of long time consumption and high labor cost, etc.

With the rapid development of internet technology, artificial intelligence (artificial intelligence, AI) technology and computer vision technology, more and more fields begin to involve automatic calculation and analysis. Now, in the field of surveillance and security, it is considered to perform the automatic analysis on the license plate of the vehicle to recognize the abnormal license plate.

The embodiment of the present application aims to extract a license plate area image from an image to be recognized, reconstruct a normalized image of the license plate area image, and recognize whether the license plate of the vehicle is abnormal using a reconstructed image and the normalized image.

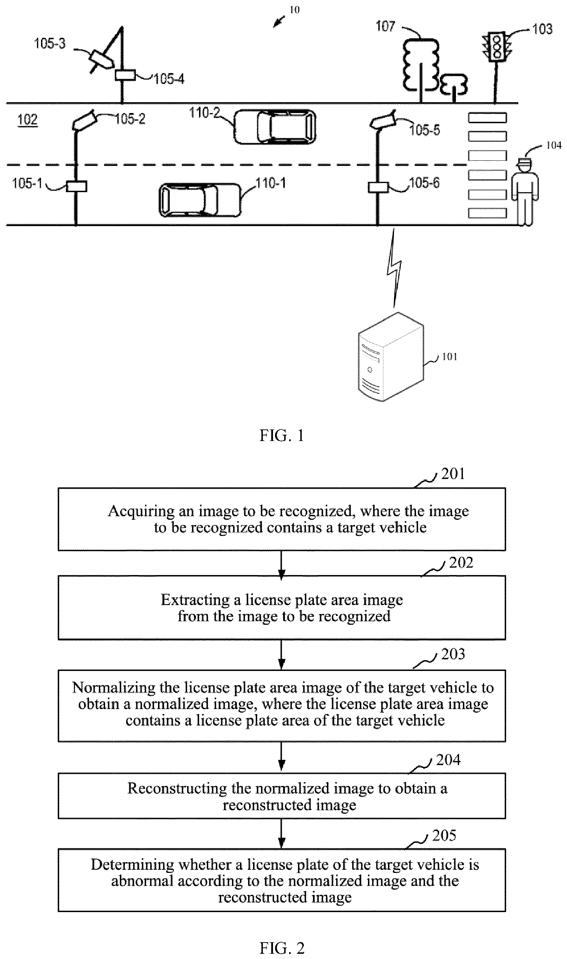

FIG. 1 is a schematic diagram of a network architecture of a method for recognizing an abnormal license plate provided by an embodiment of the present application. Referring to FIG. 1, the traffic operation environment shows some typical objects, including a road 102, a traffic indication facility 103, a plant 107 on both sides of the road and a possible pedestrian 104. It should be understood that these shown facilities and objects are only examples. According to the actual situation, possible objects in different traffic environments will change. The scope of embodiments of the present disclosure is not limited in this respect.

In an example of FIG. 1, one or more vehicles 110-1, 110-2 are driving on the road 102. For convenience of description, a plurality of vehicles 110-1 and 110-2 are collectively referred to as vehicles 110. The vehicle 110 can be any type of vehicle that can carry people and/or things and move through power systems such as engines, which include but not limited to cars, trucks, buses, electric cars, motorcycles, RVs, trains, muck trucks, trucks, etc. One or more vehicles 110 in an environment 10 are vehicles with certain positioning capability and certain automatic driving capability. Of course, another or some vehicles 110 in the environment 10 can also be vehicles without positioning capability and automatic driving capability.

One or more shooting apparatus 105-1 to 105-6 (collectively referred to as shooting apparatus 105) are also arranged in the environment 10. The shooting apparatus 105 is independent of the vehicle 110, and is usually installed at the security gate and key security sections of urban roads or expressways for shooting road conditions. The shooting apparatus 105 is, for example, a high-definition camera.

In FIG. 1, when the shooting apparatus 105 has computing power, it can recognize a captured image to be recognized, so as to recognize whether a license plate of a target vehicle in the image to be recognized is abnormal. Or, the shooting apparatus 105 sends the captured image to be recognized to an electronic device 101, and the electronic device 101 recognizes the image to be recognized, thereby recognizing whether the license plate of the target vehicle in the image to be recognized is abnormal.

In the following, based on the traffic operation environment shown in FIG. 1, taking that the shooting apparatus 105 sends the image to be recognized to the electronic device 101, and the 101 recognizes the image to be recognized to determine whether the license plate of the target vehicle is abnormal as an example, the method for recognizing an abnormal license plate described in the embodiment of the present application will be described in detail.

FIG. 2 is a flowchart of a method for recognizing an abnormal license plate provided by an embodiment of the present application, the executive subject of this embodiment is an electronic device, and this embodiment includes:
201: acquiring an image to be recognized, where the image to be recognized contains a target vehicle.

Exemplarily, the electronic device extracts the image to be recognized from the surveillance video. For example, an image frame of a vehicle included in the surveillance video is taken as the image to be recognized. For another example, a shooting apparatus uploads a series of surveillance images, and the electronic device takes an image of a vehicle contained in the surveillance image as the image to be recognized.

202: extracting a license plate area image from the image to be recognized.

203: normalizing the license plate area image of the target vehicle to obtain a normalized image, where the license plate area image contains a license plate area of the target vehicle.

Exemplarily, the image to be recognized contains one or more vehicles. When the image to be recognized includes a vehicle, the vehicle is the target vehicle; and when the image to be recognized contains multiple vehicles, the target vehicle is any one of the multiple vehicles.

Electronic device extracts the license plate area image from the image to be recognized, and the license plate area image contains the license plate area of the target vehicle. The license plate area image is also a red green blue (red green blue, RGB) image when the image to be recognized is the RGB image; and the license plate area image is also a grayscale image when the image to be recognized is the grayscale image.

After obtaining the license plate area image, the electronic device normalizes the license plate area image. For example, each pixel of the license plate area image is between 1 and 255, and the electronic device divides each pixel of the license plate area image by 255, thereby changing the pixel value of each pixel of the license plate area image to be a value between 0 and 1, and obtaining a normalized image.

204: reconstructing the normalized image to obtain a reconstructed image.

Exemplarily, the electronic device reconstructs an image based on an image reconstruction algorithm or the like. The image reconstruction algorithm includes an image reconstruction algorithm of a deep convolution neural network, an image reconstruction iterative algorithm, etc.

205: determining whether the license plate of the target vehicle is abnormal according to the normalized image and the reconstructed image.

Exemplarily, the electronic device compares the normalized image and the reconstructed image, and determines whether the license plate of the target vehicle is abnormal according to a comparison result. For example, the electronic device determines a difference value between pixels in the normalized image and corresponding pixels in the reconstructed image, and determines whether an average value of difference values of all pixels is less than a preset threshold. If the average value is less than the preset threshold, the electronic device considers that the normalized image and the reconstructed image are consistent, and the license plate of the target vehicle is normal. If the average value is greater than or equal to the preset threshold, the electronic device considers that the normalized image and the reconstructed image are inconsistent, and the license plate of the target vehicle is abnormal.

For another example, the electronic device determines a similarity between the normalized image and the reconstructed image. If the similarity is higher than a preset similarity, the electronic device considers that the normalized image and the reconstructed image are consistent and the license plate of the target vehicle is normal. If the similarity is lower than or equal to the preset similarity, the electronic device considers that the normalized image and the reconstructed image are inconsistent, and the license plate of the target vehicle is abnormal.

In the method for recognizing an abnormal license plate provided by the embodiment of the present application, after obtaining an image to be recognized containing a target vehicle, the electronic device extracts a license plate area image of the target vehicle from the image to be recognized, and normalizes the license plate area image of the target vehicle to obtain a normalized image. After that, the electronic device reconstructs the normalized image to obtain a reconstructed image, and determines whether a license plate of the target vehicle is abnormal according to the normalized image and the reconstructed image. In this process, the electronic device reconstructs the normalized image of the license plate area image, and recognizes whether the license plate of the vehicle is abnormal using the reconstructed image and the normalized image, which has high accuracy, high efficiency and low labor cost.

In the above embodiment, when the electronic device reconstructs the normalized image to obtain the reconstructed image, the normalized image is down-sampled using a coding and decoding network model to obtain a down-sampled image. Then, the down-sampled image is up-sampled using the coding and decoding network model, so as to obtain the reconstructed image.

Exemplarily, the electronic device scales the normalized image to 224x224 size, and then performs multiple down-sampling using the coding and decoding network model. In the process of multiple down-sampling, the electronic device performs multiple convolutions, such as three convolution and polling (polling) layer operations, so as to obtain a plurality of 28×28 size down-sampled images. After that, the electronic device performs multiple up-samplings on a plurality of 28×28 size down-sampled images using the coding and decoding network model to generate a reconstructed image with 224×224 size.

Using this solution, the purpose of reconstructing the normalized image is achieved.

In the above embodiment, before performing the down-sampling on the normalized image using the coding and decoding network model to obtain the down-sampled image, the electronic device also acquires a plurality of positive samples, where each positive sample of the plurality of positive samples is a normal license plate area image. After that, the electronic device trains the coding and decoding network model using the positive sample.

Exemplarily, the electronic device inputs the normalized image into the coding and decoding network model to obtain the reconstructed image. Where the coding and decoding network model is trained and obtained using a plurality of normal license plate area image. If the license plate in the license plate area image is normal, the coding and decoding network model can reconstruct a license plate area image which is as same as an original image, and the original image is the normalized image inputted to the coding and decoding network model. If the normalized image inputted to the coding and decoding network model is obtained based on an abnormal license plate area image, the coding and decoding network model cannot recognize this image, therefore, the coding and decoding network model cannot reconstruct the image which is as same as the original image, that is, the reconstructed image and the normalized image are inconsistent.

Using this solution, the coding and decoding network model configured to reconstructed image is trained to achieve and the purpose of quickly reconstructing the normalized image.

In the above embodiment, when determining whether the license plate of the target vehicle is abnormal according to the normalized image and the reconstructed image, the electronic device firstly determines a loss value of the normalized image and the reconstructed image. Then, the electronic device determines whether the loss value exceeds a preset threshold. it is determined that the license plate of the target vehicle is abnormal if the loss value is greater than or equal to the preset threshold; and it is determined that the license plate of the target vehicle is normal if the loss value is less than the preset threshold.

Exemplarily, after obtaining the reconstructed image, the electronic device calculates loss (loss) of the normalized image and the reconstructed image, so as to obtain loss values of the normalized image and the reconstructed image. For example, the electronic device calculates a difference value between each pixel in the normalized image and the corresponding pixel in the reconstructed image, and takes the difference value as the loss value of the pixel. Then, the electronic device sums the loss values of all pixels, and compares the sum of loss values of all pixels with the preset threshold. If the loss value is greater than or equal to the preset threshold, the electronic device considers the reconstructed image is different from the original image, that is, the normalized image, and then determines that the license plate of the target vehicle is abnormal; and if the loss value is less than the preset threshold, the electronic device considers that the reconstructed image is the same as the normalized image, and then determines that the license plate of the target vehicle is normal.

Using this solution, the electronic device compares the loss values of the normalized image and the reconstructed image, and determines whether the license plate of the target vehicle is abnormal according to the loss values, which has high accuracy

In the above embodiment, after recognizing the license plate of the target vehicle is an abnormal license plate, the electronic device also outputs prompt information to prompt that the license plate of the target vehicle is abnormal.

Exemplarily, after recognizing the abnormal license plate, the electronic device outputs prompt information by voice, text, etc., so as to prompt the surveillance security staff that the license plate of the target vehicle is abnormal. For example, the electronic device establishes a network connection with a large screen of the surveillance and security department, and the electronic device displays the prompt information through the large screen. For another example, the electronic device establishes a network connection with a mobile device of the surveillance security department staff, and the electronic device sends prompt information to the mobile device which broadcasts the prompt information to the staff by voice.

Using this solution, the electronic device outputs the prompt information, which is convenient for the staff to track the vehicle corresponding to the abnormal license plate in real time.

In the above embodiment, before normalizing the license plate area image of the target vehicle to obtain the normalized image, the electronic device also preprocesses the image to be recognized, which includes: scaling the image to be recognized to obtain an image with a target size, and normalizing the image with the target size to obtain a preprocessed image to be recognized.

Exemplarily, the electronic device scales the original image to be recognized to the image with a target size, where the target size is, for example, 608×608, which is not limited by the embodiment of the present application. After that, the electronic device normalizes the image with a target size. Taking an image with a target size being RGB as an example, a pixel value of each pixel of the image with a target size is between 0 and 255. The electronic device divides each pixel of the image with a target size by 255, and then subtracts a mean value and divides it by a variance. Mean values and variances of R, G and B can be set flexibly, which is not limited by the embodiment of the present application. For example, the mean values of R, G and B are 0.485, 0.456 and 0.406, respectively, and variances thereof are 0.229, 0.224 and 0.225, respectively.

For another example, when the image to be recognized is a grayscale image, the image with a target size is also a grayscale image. The electronic device divides each pixel of the grayscale image by 255, and then subtracts a mean value from each pixel and divides it by a variance. At this time, since it is a grayscale image, compared with the RGB image, there is only one mean value and only one variance.

Using this solution, through preprocessing the image to be recognized and inputting the image to be processed after being preprocessed into a license plate detection model or a vehicle detection model, a convergence speed of the model can be improved.

In the above embodiment, before normalizing the license plate area image of the target vehicle, the electronic device needs to extract the license plate area image from the image to be recognized.

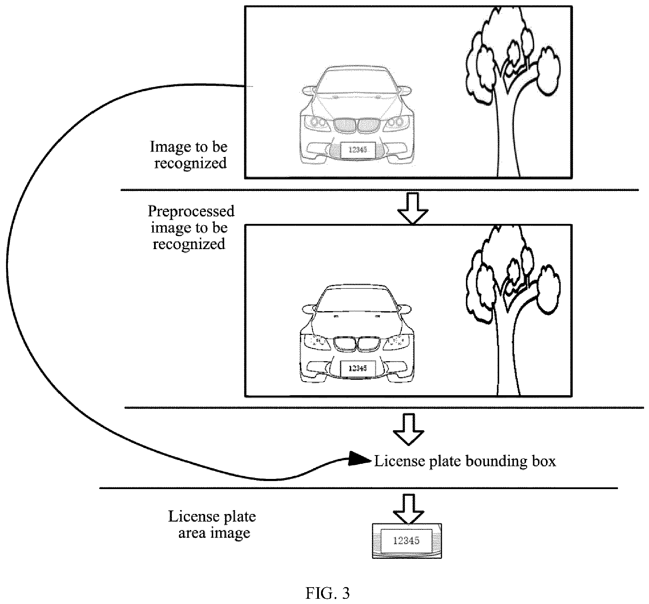

In a first method, the electronic device directly extracts the license plate area image from the image to be recognized. Exemplarily, referring to FIG. 3, FIG. 3 is a schematic diagram of a process of extracting a license plate area in a method for recognizing an abnormal license plate provided by an embodiment of the present application.

Referring to FIG. 3, the electronic device preprocesses the image to be recognized to obtain the preprocessed image to be recognized, where the preprocessing includes scaling, normalizing, etc. of the image to be processed. After that, the electronic device inputs the preprocessed image to be recognized into the license plate detection model which is based on, for example, that you only look once (you only look once, YOLO) framework 3. The license plate detection model is trained and obtained using a plurality of images containing the license plate as a positive sample and images not containing the license plate as a negative sample. The input of the license plate detection model is the preprocessed image to be processed, and the output of the license plate detection model is location information of a bounding box (bounding box) of the license plate, which contains four values: (xmin, ymin, w, h), which respectively represents x coordinate and y coordinate of a vertex in an upper left corner of the bounding box, and a width and a height of the bounding box.

After obtaining the position information of the license plate bounding box, the electronic device extracts the license plate area image from the image to be recognized.

Using this method, a purpose of flexibly extracting the license plate area image from the image to be recognized is realized.

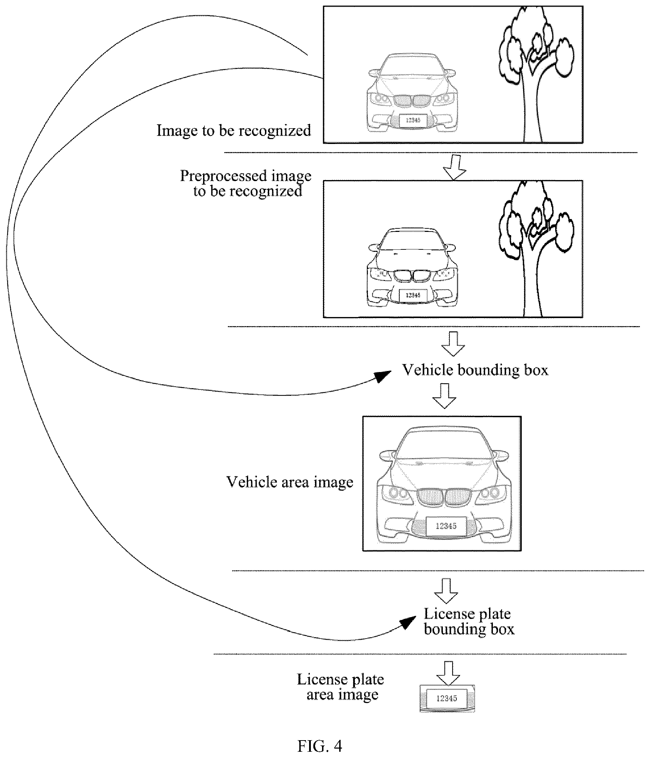

In a second method, the electronic device firstly extracts the vehicle area image from the image to be recognized, and then determines the license plate bounding box of the target vehicle according to the vehicle area image. Finally, the electronic device extracts the license plate area image from the image to be recognized according to the bounding box. Exemplarily, referring to FIG. 4, FIG. 4 is another schematic diagram of a process of extracting a license plate area in a method for recognizing an abnormal license plate provided by an embodiment of the present application.

Referring to FIG. 4, the electronic device preprocesses the image to be recognized to obtain the preprocessed image to be recognized, where the preprocessing includes scaling and normalizing the image to be processed. After that, the electronic device inputs the preprocessed image to be recognized into the vehicle detection model, which is based on, for example, you only look once (you only look once, YOLO) framework 3. The vehicle detection model, for example, is trained and obtained using a plurality of images containing the vehicle as a positive sample and images not containing the vehicle as a negative sample. The input of the vehicle detection model is the preprocessed image to be processed, the output of the vehicle detection model is location information of a bounding box (bounding box) of the vehicle, which contains four values: (xmin, ymin, w, h), which respectively represent x coordinate and y coordinate of a vertex in the upper left corner of bounding box of the vehicle, and a width and a height of the bounding box.

After obtaining the position information of the vehicle bounding box, the electronic device extracts the vehicle area image from the image to be recognized.

After that, the electronic device preprocesses vehicle area image to obtain a preprocessed vehicle area image. Where the preprocessing includes scaling and normalizing the image to be processed. After preprocessing, the electronic device inputs the preprocessed vehicle area image into the license plate detection model, which is, for example, a neural network model with res34 as the backbone (backbone), and the neural network model is based on, for example, the YOLO3 framework. The input of the license plate detection model is the preprocessed image to be processed, and the output of the license plate detection model is location information of a bounding box (bounding box) of the license plate, which contains four values: (xmin, ymin, w, h), which respectively represent x coordinate and y coordinate of a vertex in the upper left corner of the bounding box, and a width and a height of the bounding box.

After obtaining the position information of the bounding box of the license plate, and the electronic device extracts the license plate area image from the image to be recognized.

Using this method, when the license plate in the image to be recognized occupies a small area, the vehicle area image can be extracted firstly from the image to be recognized, and then the license plate area image can be extracted from the vehicle area image, which can improve the accuracy of the license plate area image.

In the above embodiment, the vehicle detection model can output the location information of the bounding box of a vehicle aiming at the vehicle area image of any type of vehicle. However, the embodiment of the present application is not limited to this. For example, in the process of training the vehicle detection model, a positive sample is a specific type of vehicle image, such as a muck truck image, a large truck image, etc. When the vehicle detection model is used to process the image to be processed, the input of the vehicle detection model is the preprocessed image to be processed, and the output is the vehicle type and the location information of bounding box of the vehicle, which contains five values: (cls, xmin, Ymin, w, h), which respectively represent the type of the vehicle, x-coordinate and y-coordinate of the vertex in the upper left corner of the bounding box, and the width and height of the bounding box. The types of vehicles are, for example, a large truck, a muck truck, etc. If the target vehicle in the image to be processed does not meet the target type, such as the large truck, the vehicle detection model stops recognizing the image to be processed.

Using this solution, the electronic device only recognizes the abnormal license plate for the target type of the vehicle according to the requirements, which is flexible and simple, and reduces the data processing capacity of the electronic device.

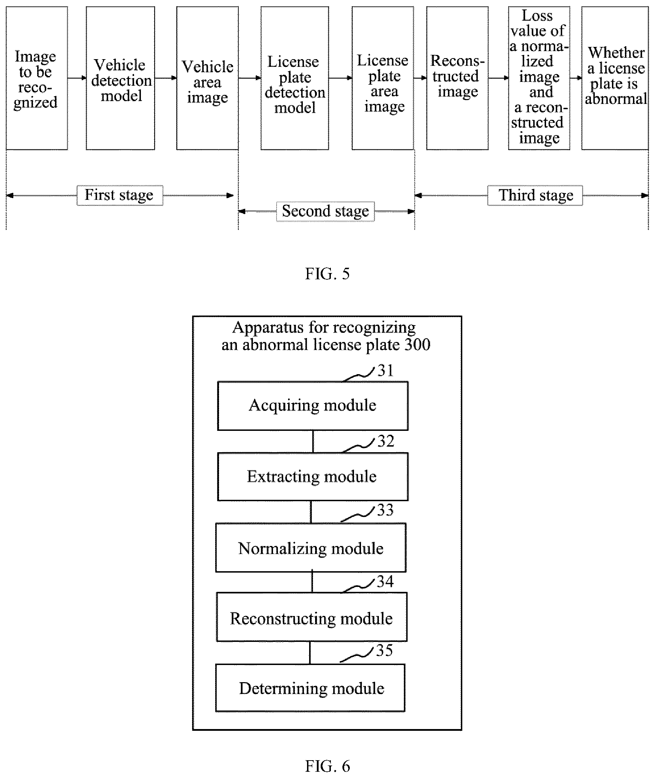

In the following, the second method mentioned above will be explained in detail. Exemplarily, referring to FIG.5, FIG.5 is another process schematic diagram of a method for recognizing an abnormal license plate provided by an embodiment of the present application. Referring to FIG. 5, the recognition process of the abnormal license plate mainly includes three stages: a first stage, a vehicle detection and recognition stage; a second stage, a license plate detection and recognition stage; and a third stage, an abnormal license plate recognition stage based on reconstruction.

The first stage, the vehicle detection and recognition stage.

In this stage, the electronic device firstly acquires the image to be recognized which is, for example, an image taken by a surveillance camera.

Secondly, the electronic device preprocesses the image to be recognized. For example, the electronic device scales the image to be processed to an image with a target size with 608×608, which is not limited by the embodiment of the present application. After scaling, the electronic device subtracts a mean value from image with a target size and divides it by a variance. Taking the image to be recognized being RGB as an example, the mean values of R, G and B are 0.485, 0.456 and 0.406, respectively, and the variances are 0.229, 0.224 and 0.225, respectively.

Then, the electronic device inputs the preprocessed image to be recognized into the vehicle detection model. The vehicle detection model is, for example, a neural network model based on YOLOV3 framework. The output of the vehicle detection model is the category of the target vehicle and the location information of the vehicle bounding box. There are five values: (cls, xmin, ymin, w, h), which respectively represent the type of vehicle, x coordinate and y coordinate of the vertex in the upper left corner of the bounding box, and a width and a height of the bounding box.

Finally, the electronic device extracts the vehicle area image from the image to be recognized according to the location information of the vehicle bounding box.

At this stage, if the vehicle detection model can't detect the vehicle from the preprocessed image to be recognized, it ends directly.

A second stage, the license plate detection and recognition stage.

At this stage, the electronic device firstly preprocesses the vehicle area image. In the preprocessing process, the electronic device scales the vehicle area image to a fixed size, such as 320×320, which is not limited by the embodiment of the present application. After scaling, the electronic device subtracts the mean value from each pixel of the fixed-size vehicle area image and divides it by the variance. Taking the vehicle area image being RGB image as an example, the mean values of R, G and B are 0.485, 0.456 and 0.406, respectively, and the variances are 0.229, 0.224 and 0.225, respectively.

Secondly, the electronic device inputs the preprocessed vehicle area image into the license plate detection model, which is, for example, a neural network model with res34 as the backbone (backbone). The neural network model is, for example, a model based on YOLO framework. The input of the license plate detection model is the preprocessed image to be processed, and the output is the location information of the license plate bounding box, which contains four values: (xmin, ymin, w, h), which respectively represents x coordinate and y coordinate of the vertex in the upper left corner of the bounding box and the width and height of the bounding box.

Finally, the electronic device extracts the license plate area image from the image to be recognized according to the location information of the license plate bounding box.

The third stage, the abnormal license plate recognition stage based on reconstruction.

At this stage, the electronic device firstly normalizes the license plate area image. The pixel value of each pixel of the license plate area image is between 0 and 255. In the normalization process, the electronic device divides each pixel of the license plate area image by 255, thus normalizing the pixel value of each pixel to be between 0 and 1.

Then, the electronic device inputs the normalized image into the coding and decoding network model to obtain the reconstructed image. Where the coding and decoding network model is trained and obtained by a plurality of normal license plate area images. After obtaining the reconstructed image, the electronic device calculates the loss value of the reconstructed image and the normalized image.

Finally, the electronic device judges whether the license plate of the target vehicle is abnormal according to the loss value. For example, if the loss value is greater than or equal to the preset threshold, then it is determined that the license plate of the target vehicle is abnormal, and it is determined that the license plate of the target vehicle is normal if the loss value is less than the preset threshold value.

In the above, the specific implementation of the method for recognizing an abnormal license plate mentioned in the embodiment of the present application is described, and the following is an apparatus embodiment of the present application, which can be configured to execute the method embodiment of the present application. For details not disclosed in the apparatus embodiment of the present application, please refer to the method embodiment of the present application.

FIG. 6 is a structural schematic diagram of an apparatus for recognizing an abnormal license plate provided by an embodiment of the present application. The apparatus can be integrated in or realized by the electronic device. As show in FIG. 6, in this embodiment, the apparatus for recognizing an abnormal license plate 300 can include:
an acquiring module 31, configured to acquire an image to be recognized, where the image to be recognized contains a target vehicle;
an extracting module 32, configured to extract a license plate area image from the image to be recognized;
a normalizing module 33, configured to normalize the license plate area image of the target vehicle to obtain a normalized image, where the license plate area image contains a license plate area of the target vehicle;
a reconstructing module 34, configured to reconstruct the normalized image to obtain a reconstructed image; and
a determining module 35, configured to determine whether a license plate of the target vehicle is abnormal according to the normalized image and the reconstructed image.

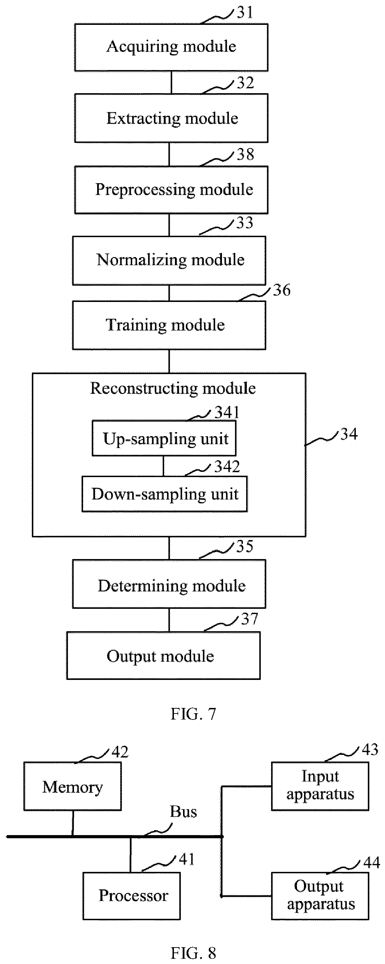

FIG. 7 is another structural schematic diagram of an apparatus for recognizing an abnormal license plate provided by an embodiment of the present application, referring to FIG. 7, the apparatus for recognizing an abnormal license plate 300 provided by this embodiment is obtained on the basis of the above-mentioned FIG. 6, and the reconstructing module 34 includes:
a down-sampling unit 341, configured to down-sample the normalized image using a coding and decoding network model to obtain a down-sampled image; and
a down-sampling unit 342, configured to up-sample the down-sampled image using the coding and decoding network model to obtain a reconstructed image.

In a feasible design, the apparatus 300 further includes: a training module 36, configured to acquire a plurality of positive samples before the down-sampling unit 341 down-samples a normalized image using the coding and decoding network model to obtain a down-sampled image, where each positive sample in the plurality of positive samples is a normal license plate area image, and train the coding and decoding network model using the positive sample.

In a feasible design, the determining module 35 is configured to determine a loss value of the normalized image and the reconstructed image, determine that the license plate of the target vehicle is abnormal if the loss value is greater than or equal to the preset threshold; and determine that the license plate of the target vehicle is normal if the loss value is less than the preset threshold value.

In a feasible design, the apparatus 300 further includes: an outputting module 37, configured to output prompt information, after a second determining unit 352 determines that the license plate of the target vehicle is abnormal, where the prompt information is used for prompting that a license plate of a target vehicle is abnormal.

In a feasible design, the extracting module 32 is configured to extract a vehicle area image from an image to be recognized, determine a bounding box of the license plate of the target vehicle according to the vehicle area image; and extract the license plate area image from the image to be recognized according to the bounding box.

In a feasible design, the extracting module 32 is configured to recognize which type that the target vehicle belongs to according to a vehicle area image, and determine a bounding box of the license plate of a target vehicle according to the vehicle area image when the type that the target vehicle belongs to is a target type.

In a feasible design, the apparatus 300 further includes: a preprocessing module 38, configured to scale an image to be recognized to obtain an image with a target size, and normalize the image with the target size to obtain a preprocessed image to be recognized, before the normalizing module normalizes the license plate area image of the target vehicle to obtain the normalized image.

FIG. 8 is a block diagram of an electronic device for implementing a method for recognizing an abnormal license plate according to an embodiment of the present application. The electronic device is intended to represent various forms of digital computers, such as a laptop computer, a desktop computer, a workstation, a personal digital assistant, a server, a blade server, a mainframe computer, and other suitable computers. The electronic device can also represent various forms of mobile apparatuses, such as a personal digital assistant, a cellular phone, a smart phone, a wearable device, and other similar computing apparatuses. The components shown herein, their connections and relationships, and their functions are merely examples, and are not intended to limit the implementation of the application described and/or required herein.

According to embodiment of the present application, the present application also provides a computer program product including a computer program, where the computer program is stored in a non-transitory computer-readable storage medium, at least one processor of an electronic device can read the computer program from the non-transitory computer-readable storage medium, and the at least one processor executes the computer program to enable the electronic device to execute the solutions provided by any one of the above embodiments.

As shown in FIG. 8, the electronic device includes: one or more processors 41, a memory 42, and interfaces for connecting various components including a high-speed interface and a low-speed interface. Various components are connected to each other by using different buses, and can be installed on a common motherboard or installed in other ways according to requirements. The processor can process instructions executed in the electronic device, which includes instructions stored in or on the memory to display graphical information of a GUI on an external input/output apparatus (such as, a display device coupled to an interface). In other implementations, if needed, multiple processors and/or multiple buses may be used with multiple memories. Similarly, multiple electronic devices can be connected, and each device provides some necessary operations (for example, as a server array, a group of blade servers, or a multi-processor system). In FIG. 8, one processor 41 is taken as an example.

The memory 42 is a non-transitory computer-readable storage medium provided by the present application, where the memory stores instructions executable by at least one processor to cause the at least one processor to execute the method for recognizing an abnormal license plate provided by the present application. The non-transitory computer-readable storage medium of the present application stores computer instructions, and the computer instructions are used to cause a computer to execute the method for recognizing an abnormal license plate provided by the present application.

As a non-transitory computer-readable storage medium, the memory 42 can be used to store non-transitory software programs, non-transitory computer executable programs, and modules, such as program instructions or modules corresponding to the method for recognizing an abnormal license plate in the embodiments of the present application (for example, the acquiring module 31, the extracting module 32, the normalizing module 33, the reconstructing module 34, the determining module 35 shown in FIG. 6 and the training module 36, the outputting module 37 and the preprocessing module 38 shown in FIG. 7, etc.). The processor 41 runs non-transient software programs, instructions, and modules stored in the memory 42 to execute various functional applications and data processing of a server that is, to implement the method for recognizing an abnormal license plate of the above method embodiment.

The memory 42 can include a program storage area and a data storage area. Where the program storage area may store an operating system and an application program required for at least one function; and the data storage area may store data created when an electronic device executes the method for recognizing an abnormal license plate. In addition, the memory 42 can include a high-speed random-access memory, and also include a non-transitory memory, for example, at least one magnetic disk storage device, a flash memory device, or other non-transitory solid-state storage devices. In some embodiments, the memory 42 can optionally include memories remotely provided with respect to the processor 41, and these remote memories may be connected to the electronic device used to execute a method for recognizing an abnormal license plate through a network. Examples of the aforementioned networks include, but are not limited to, the Internet, a corporate intranet, a local area network, a mobile communication network, and a combination thereof.

The electronic device for recognizing an abnormal license plate may further include: an input apparatus 43 and an output apparatus 44. The processor 41, the memory 42, the input apparatus 43, and the output apparatus 44 may be connected through a bus or other methods. In FIG. 8, the connection through a bus is taken as an example.

The input apparatus 43 can receive input digital or character information, and generate key signal input related to user settings and function control of the electronic device for recognizing an abnormal license plate, for example, a touch screen, a keypad, a mouse, a trackpad, a touchpad, a pointer, one or more mouse buttons, a trackball, a joystick and other input apparatuses. The output apparatus 44 can include a display device, an auxiliary lighting apparatus (for example, an LED), a tactile feedback apparatus (for example, a vibration motor), and the like. The display device may include, but is not limited to a liquid crystal display (LCD), a light emitting diode (LED) display, and a plasma display. In some implementations, the display device may be a touch screen.

Various implementations of the systems and technologies described herein can be implemented in digital electronic circuit systems, integrated circuit systems, application specific ASICs (application specific integrated circuit), computer hardware, firmware, software, and/or combinations thereof. These various embodiments can include: being implemented in one or more computer programs, the one or more computer programs may be executed and/or interpreted on a programmable system including at least one programmable processor, and the programmable processor can be a dedicated or general-purpose programmable processor, which can receive data and instructions from a storage system, at least one input apparatus, and at least one output apparatus, and transmit the data and instructions to the storage system, the at least one input apparatus, and the at least one output apparatus.

These computing programs (also called programs, software, software applications, or codes) include machine instructions for a programmable processor, and can utilize a high-level procedure and/or object-oriented programming language, and/or an assembly/machine language to implement these calculation procedures. As used herein, the terms "machine-readable medium" and "computer-readable medium" refer to any computer program product, device, and/or apparatus (for example, a magnetic disk, an optical disk, a memory, a programmable logic device (PLD)) used to provide machine instructions and/or data to a programmable processor, including machine-readable media that receive machine instructions as machine-readable signals. The term "machine-readable signal" refers to any signal used to provide machine instructions and/or data to a programmable processor.

In order to provide interaction with a user, the system and technology described here can be implemented on a computer with: a display apparatus for displaying information to the user (for example, a CRT (Cathode Ray Tube) or a LCD (Liquid Crystal Display)) monitor); and a keyboard and a pointing apparatus (for example, a mouse or a trackball) through which the user can provide input to the computer. Other types of apparatuses can also be used to provide interaction with the user; for example, the feedback provided to the user can be any form of sensing feedback (for example, visual feedback, auditory feedback, or tactile feedback); and can be in any form (including acoustic input, voice input, or tactile input) to receive input from the user.

The systems and technologies described here can be implemented in a computing system that includes a back-end component (for example, as a data server), or a computing system that includes a middleware component (for example, an application server), or a computing system that includes a front-end component (for example, a user computer with a with a graphical user interface or a web browser through which the user can interact with the implementation of the system and technology described here), or a computing system that includes any combination of such background component, intermediate component, or front-end component. The components of the system can be connected to each other through any form or medium of digital data communication (for example, a communication network). Examples of the communication network include: a local area network (LAN), a wide area network (WAN), and the Internet.

The computer system can include a client and a server. The client and the server are generally far away from each other and usually interact through a communication network. The relationship between the client and the server is generated by computer programs running on the corresponding computers and having a client-server relationship with each other.

The embodiment of the present application further provides a method for recognizing an abnormal license plate, including: acquiring a license plate area image, normalizing the license plate area image to obtain a normalized image, and reconstructing the normalized image to obtain a reconstructed image.

Through the method for recognizing an abnormal license plate provided by the present application, the electronic device reconstructs a normalized image of a license plate area image, and recognizes whether a license plate of a vehicle is abnormal using the reconstructed image and the normalized image, which has high accuracy, high efficiency and low labor cost.

It should be understood that the various forms of processes shown above can be used to reorder, add or delete steps. For example, the steps described in the present application can be performed in parallel, sequentially, or in different orders, as long as the desired result of the technical solution disclosed in the present application can be achieved, which is not limited herein.

The above specific implementations do not constitute a limitation on the protection scope of the present application. Those skilled in the art should understand that various modifications, combinations, sub-combinations and substitutions can be made according to design requirements and other factors. Any amendments, equivalent substitutions and improvements made within the spirit and principles of the present application shall be included in the protection scope of the present application.

## Claims

1. A method for recognizing an abnormal license plate, comprising:
acquiring (201) an image to be recognized, wherein the image to be recognized contains a target vehicle;
extracting (202) a license plate area image from the image to be recognized;
normalizing (203) the license plate area image of the target vehicle to obtain a normalized image, wherein the license plate area image contains a license plate area of the target vehicle;
reconstructing (204) the normalized image to obtain a reconstructed image; and
determining (205) whether a license plate of the target vehicle is abnormal according to the normalized image and the reconstructed image.

2. The method according to claim 1, wherein the reconstructing (204) the normalized image to obtain the reconstructed image comprises:
down-sampling the normalized image using a coding and decoding network model to obtain a down-sampled image; and
up-sampling the down-sampled image using the coding and decoding network model to obtain the reconstructed image.

3. The method according to claim 2, wherein before down-sampling the normalized image using the coding and decoding network model to obtain the down-sampled image, the method further comprises:
acquiring a plurality of positive samples, wherein each positive sample of the plurality of positive samples is a normal license plate area image; and
training the coding and decoding network model using the positive sample.

4. The method according to any one of claims 1-3, wherein the determining (205) whether the license plate of the target vehicle is abnormal according to the normalized image and the reconstructed image comprises:
determining a loss value of the normalized image and the reconstructed image;
determining that the license plate of the target vehicle is abnormal if the loss value is greater than or equal to a preset threshold; and
determining that the license plate of the target vehicle is normal if the loss value is less than the preset threshold value; preferably,
after determining that the license plate of the target vehicle is abnormal if the loss value is greater than or equal to the preset threshold, the method further comprises:
outputting prompt information, wherein the prompt information is used for prompting that the license plate of the target vehicle is abnormal.

5. The method according to any one of claims 1-3, wherein the extracting (202) the license plate area image from the image to be recognized comprise:
extracting a vehicle area image from the image to be recognized;
determining a license plate bounding box of the target vehicle according to the vehicle area image; and
extracting the license plate area image from the image to be recognized according to the bounding box.

6. The method according to claim 5, wherein the determining the license plate bounding box of the target vehicle according to the vehicle area image comprises:
recognizing which type that the target vehicle belongs to according to the vehicle area image; and
determining the license plate bounding box of the target vehicle according to the vehicle area image when the type that the target vehicle belongs to is a target type.

7. The method according to any one of claims 1-3, wherein before normalizing (203) the license plate area image of the target vehicle to obtain the normalized image, the method further comprises:
scaling the image to be recognized to obtain an image with a target size; and
normalizing the image with the target size to obtain a preprocessed image to be recognized.

8. An apparatus for recognizing an abnormal license plate (300), comprising:
an acquiring module (31), configured to acquire an image to be recognized, wherein the image to be recognized contains a target vehicle;
an extracting module (32), configured to extract a license plate area image from the image to be recognized;
a normalizing module (33), configured to normalize the license plate area image of the target vehicle to obtain a normalized image, wherein the license plate area image contains a license plate area of the target vehicle;
a reconstructing module (34), configured to reconstruct the normalized image to obtain a reconstructed image; and
a determining module (35), configured to determine whether a license plate of the target vehicle is abnormal according to the normalized image and the reconstructed image.

9. The apparatus according to claim 8, wherein the reconstructing module (34) comprises:
a down-sampling unit (342), configured to down-sample the normalized image using a coding and decoding network model to obtain a down-sampled image; and
an up-sampling unit (341), configured to up-sample the down-sampled image using the coding and decoding network model to obtain the reconstructed image.

10. The apparatus according to claim 9, wherein the apparatus further comprises:
a training module (36), configured to acquire a plurality of positive samples before the down-sampling unit (342) down-samples the normalized image using the coding and decoding network model to obtain the down-sampled image, wherein each positive sample of the plurality of positive samples is a normal license plate area image, and train the coding and decoding network model using the positive sample.

11. The apparatus according to any one of claims 8-10, wherein the determining module (35) is configured to determine a loss value of the normalized image and the reconstructed image, determine that the license plate of the target vehicle is abnormal if the loss value is greater than or equal to a preset threshold, and determine that the license plate of the target vehicle is normal if the loss value is less than the preset threshold value.

12. The apparatus according to claim 11, wherein the apparatus further comprises:
an outputting module (37), configured to output prompt information after the determining module (35) determines that the license plate of the target vehicle is abnormal, wherein the prompt information is used for prompting that the license plate of the target vehicle is abnormal.

13. The apparatus according to any one of claims 8-10, wherein the extracting module (32) is configured to extract a vehicle area image from the image to be recognized, determines a license plate bounding box of the target vehicle according to the vehicle area image, and is configured to extract the license plate area image from the image to be recognized according to the bounding box.

14. A non-transitory computer-readable storage medium storing computer instructions, wherein the computer instructions are used to cause an electronic device to execute the method according to any one of claims 1-7.

15. A computer program product, comprising a computer program, wherein the computer program, when executed by a processor, implements the method according to any one of claims 1-7.
